# EUROPÄISCHE PATENTSCHRIFT

(11) **EP 2 609 377 B1**
(45) Veröffentlichungstag und Bekanntmachung des Hinweises auf die Patenterteilung: **23.07.2014**
(21) Anmeldenummer: 11749781.8
(22) Anmeldetag: 04.08.2011
(51) Int. Cl.: F24J 2/54, F24J 2/10

(54) **SPIEGELMODUL**
MIRROR MODULE
MODULE DE MIROIR

(30) Priorität: 23.08.2010 AT 14062010
(43) Veröffentlichungstag der Anmeldung: 03.07.2013
(73) Patentinhaber: Fresnex GmbH, 2351 Wiener Neudorf (AT)
(72) Erfinder: SCHNEIDER, Hartmut, 2351 Wr. Neudorf (AT)
(74) Vertreter: Vinazzer, Edith
(86) Internationale Anmeldenummer: PCT/EP2011/063424
(87) Internationale Veröffentlichungsnummer: WO 2012/025356

(56) Entgegenhaltungen:
- EP-A2- 2 088 384
- CH-A2- 700 099
- DE-U1-202008 011 468
- US-A1- 2010 051 016

## Beschreibung

Die Erfindung betrifft ein Spiegelmodul eines Fresnel-Solar-Kollektor-Systems mit einer Vielzahl von parallel zueinander auf einer Trägerplatte schwenkbar gelagerten Spiegelelementen, welche das Sonnenlicht auf eine über dem Spiegelmodul erhöht gelagerte Receiver-Einheit fokussieren.

### Beschreibung - Stand der Technik

In der Regel werden Fresnel-Solar-Kollektor-Systeme in thermischen Kraftwerken zur Stromerzeugung eingesetzt. Die Erfindung kann aber auch in Fresnel-Solar-Kollektor-Systemen zur Erzeugung von Prozesswärme, in Wasserentsalzungsanlagen oder zur Stromerzeugung mit Sterlingmotoren oder Photovoltaik-Anlagen eingesetzt werden.

Aus dem Stand der Technik sind Fresnel-Solar-Kollektor-Systeme seit langem bekannt. Kennzeichen dieser Systeme sind eine große Anzahl von länglichen, zumeist flachen oder leicht gekrümmten Spiegeln, die das Sonnenlicht einzeln auf einen linearen Receiver bündeln. Hierzu werden die Spiegel um ihre Längsachse der Sonne nachgeführt. In der Regel sind mehrere Spiegel zu einer Gruppe zusammengefasst und werden über Stangen gekoppelt mit einem gemeinsamen Antrieb bewegt.

So ist etwa in der US-A-3861379 ein Fresnel-Solar-Kollektor-System beschrieben, das mehrere miteinander gekoppelte und über einen Antrieb gesteuerte, flache Spiegel aufwei st.

In der US-A-5542409 wird ebenfalls ein Fresnel-Solar-Kollektor-System angeführt, das über ein Getriebe und eine Koppelstange eine Reihe von axial hintereinander angeordneten Spiegeln dem Sonnenstand entsprechend ausrichtet.

Die EP-A-1754942 beschreibt einen Tragrahmen für ein Fresnel-Solar-Kollektor-System mit schwenkbaren, miteinander gekoppelten Primär- und direkt über dem Receiver angeordneten Sekundärspiegeln.

In der EP-A-2088384 ist ein Solarkraftwerk mit Justageeinrichtung beschrieben, dessen Spiegelelemente eine Länge bis 100 m und eine Breite von 10 cm bis 25 cm aufweisen und auf einer Trägerplatte schwenkbar gelagert sind.

In allen vier Dokumenten sind die schwenkbaren Spiegelelemente jeweils an ihren beiden Enden gelagert.

### Problembeschreibung

Ein wesentliches Problem von bisher bekannten, großtechnisch wirtschaftlichen Fresnel-Solar-Kollektor-Systemen stellt die Einstellung jedes einzelnen Spiegels beim Einbau vor Ort dar. Dabei werden die Spiegel miteinander mechanisch gekoppelt, um anschließend mit einem gemeinsamen Gruppenantrieb der Sonne nachgeführt werden zu können. Bei der Koppelung der einzelnen Spiegelelemente ist eine hohe Einstellgenauigkeit erforderlich, um später einen guten optischen Wirkungsgrad erzielen zu können. Da dieser Zusammenbau aufgrund der Größe bei herkömmlichen Spiegelelementen von Fresnel-Solar-Kollektor-Systemen auf der Baustelle erfolgt, ist die Einstellung der Koppelung nicht immer exakt zu bewerkstelligen beziehungsweise stellt einen großen Zeit- und Personalaufwand dar. Ungenau eingestellte Spiegel reduzieren den Wirkungsgrad der Anlage wesentlich.

Ein weiteres Problem ist die durch die Breite der Spiegel bewirkte Reduktion des optischen Wirkungsgrads. Dieses Problem macht einen Sekundärspiegel notwendig, der zwar an dem Receiver vorbeistrahlende Sonnenstrahlen durch eine zweite Reflexion auf den Receiver bündelt, aber den Wirkungsgrad des Systems durch eben diese zweite Reflexion verringert. Grund hierfür ist, dass die Spiegel breiter sind als das ReceiverRohr. Eine Verkleinerung der Spiegelbreite würde die Ausbeute der durch einfache Reflexion am Primärspiegel direkt auf den Receiver treffenden Sonnenstrahlen erhöhen, macht aber eine höhere Anzahl von Spiegeln notwendig. Schmälere Spiegel bewirken in der Regel auch eine parallel stattfindende Verkleinerung des Querschnitts des Tragkörpers und somit eine Reduktion der Steifigkeit desselben. Diese Verringerung der Steifigkeit macht bei gleich bleibender maximaler Durchbiegung eine Verkürzung der an den Enden gelagerten Spiegelelemente notwendig, was wiederum die Kosten des Systems erhöht. Eine andere Möglichkeit ist eine relativ zu einer kleineren Spiegelbreite verstärkte Ausführung des Tragkörpers, was jedoch ebenfalls zu einer Kostensteigerung des Systems führt. Für beide Varianten gilt, dass ein Einbau der Spiegelelemente mit geringerer Breite und in größerer Anzahl vor Ort die Montagekosten erhöht und so die Wirtschaftlichkeit der Anlage deutlich senkt.

Fresnel-Solar-Kollektor-Systeme weisen im Vergleich zu andere konzentrierten Solar-Kollektor-Systemen, wie zum Beispiel linearen Parabol-Spiegel-Kollektor-Systemen, eine geringere Windanfälligkeit auf. Trotzdem ist die Robustheit und Stärke der Ausführung der Lagerung der Spiegel sowie jene der Koppelsysteme und der damit verbundenen Stellantriebe auch bei Fresnel-Solar-Kollektor-Systemen im Wesentlichen durch die möglichen Windkräfte an den Spiegelelementen gegeben. Eine weitere Reduktion der Windangriffsfläche würde zu einer weiteren Verkleinerung der Koppelsysteme und der damit verbundenen Stellantriebe führen, wodurch die Gesamtkosten des Spiegelmoduls gesenkt werden könnten.

Fresnel-Solar-Kollektor-Systeme werden zur Erzeugung von Dampf eingesetzt und können neben Kraftwerken zur Stromerzeugung auch in der Industrie als alternative Systeme zur Prozessdampferzeugung eingesetzt werden. Hierbei ist es vorteilhaft, vorhandene Dachflächen von Lager- oder Produktionsstätten als Aufstellungsort zu nützen. Herkömmliche Systeme bestehen in der Regel aus Glasspiegeln, die auf Stahltragkörpern montiert und von Stahl-Trägersystemen getragen werden. Solche Systeme weisen ein hohes Gesamtgewicht auf. Um Verstärkungen vorhandener Gebäudetragkonstruktionen gering zu halten, ist es zielführend, ein Fresnel-Solar-Kollektor-System mit geringem Gesamtgewicht zu entwickeln. Zusätzlich vereinfachen leichtere Systeme die Handhabung während des gesamten Produktlebenszyklus, besonders den Transport sowie die Montage vor Ort.

### Lösung/Erfindung

Basierend auf dem Stand der Technik liegt der Erfindung die Aufgabe zugrunde, ein vorgefertigtes, hochpräzises Spiegelmodul mit geringer Windangriffsfläche der bewegten Teile und hohem optischen Wirkungsgrad durch direkte Fokussierung auf das Receiverrohr sowie mit geringem Gewicht und leichter Montage zu entwickeln.

Gelöst wird die gestellte Aufgabe erfingdungsgemäß durch ein Spiegelmodul gemäß Anspruch 1 und ein Verfahren zur Herstellung eines Spiegelmoduls gemäß Anspruch 14.

Vorteilhafte Ausführungsformen und Weiterbildungen sind Gegenstand der Unteransprüche 2-13 und 15.

Insbesondere sind die Spiegelelemente an der Trägerplatte zumindest im Wesentlichen über ihre gesamte Länge schwenkbar gelagert.

Durch die erfindungsgemäße Lagerung ist es möglich, die Spiegelelemente mit geringem Gewicht und mit reduziertem Materialeinsatz herzustellen. Die Stützfunktion wird bei der Erfindung durch die ortsfeste, starre Trägerplatte übernommen, die Funktion der Spiegelung des Sonnenlichts auf die Receiver-Einheit durch die schwenkbaren Spiegelelemente. Diese erfindungsgemäße Trennung der Funktionen ermöglicht eine schmale aber in Achsrichtung sehr lange und extrem leichte Ausführung der schwenkbaren und der Sonne nachgeführten Spiegelelemente. Die schwenkbare Lagerung jedes Spiegelelementes erfolgt ferner erfindungsgemäß durch zumindest ein Filmscharnier, welches bei einer bevorzugten Ausführungsform über einen Großteil der Länge des Spiegelelementes verläuft und so stets für die entsprechende Unterstützung und Ausrichtung sorgt.

Die Trägerplatte selbst ist vorzugsweise in Leichtbauweise hergestellt und trägt neben den Spiegelelementen auch die Verbindungseinheit und den Antrieb für die Nachführung. Die Justierung der einzelnen Spiegelelemente, die Befestigung der Verbindungseinheit und die Montage des Antriebs kann so bereits in der Werkshalle maschinell und unter optimalen Bedingungen erfolgen und es kann deren Qualität entsprechend kontrolliert werden. Ausgeliefert wird ein in sich voll funktionsfähiges und hochpräzises Spiegelmodul, welches vor Ort lediglich als komplettes Modul gegenüber der Receiver-Einheit ausgerichtet werden muss.

Die Breite der Spiegelelemente kann nun so gewählt werden, dass sie höchstens dem Durchmesser der Receiver-Einheit entspricht, insbesondere geringer als der Durchmesser der Receiver-Einheit ist, und somit das gesamte reflektierte Sonnenlicht direkt ohne Sekundärspiegel auf die Receiver-Einheit trifft. Dies erhöht den optischen Wirkungsgrad des Gesamtsystems. Die geringe Breite bewirkt weiters eine sehr geringe Windangriffsfläche der bewegten Teile, wodurch diese mit geringem Materialeinsatz realisiert und der Antrieb klein ausgeführt werden können. Neben der Kostenersparnis in der Fertigung und beim Transport bringt dies auch eine leichtere Montage mit sich.

Generell ist durch die extrem leichte und Material sparende Ausführung eine bevorzugte Anwendung des Fresnel-Solar-Kollektor-Systems der Einsatz auf Flachdachflächen. Durch die Trägerplatte kann auch die Verbindung mit dem Dach variabel an jenen Stellen gewählt werden, an denen sich Tragprofile und Versteifungen unter der Dachfläche befinden.

Erfindungsgemäß können sich auf der Außenseite der Spiegelmodule Randleisten befinden, die mehrere Funktionen erfüllen. Zum einen bieten die Randleisten eine zusätzliche Windabdeckung der außen liegenden Spiegelelemente, zum anderen ermöglichen sie durch ihre Höhe eine Stapelung der Spiegelmodule übereinander ohne dass sich dabei die Spiegelelemente selbst berühren. Vorzugsweise werden die Randleisten auch mit Haltegriffen und Ösen zur einfachen Handhabung während der Montage sowie mit Fahrrinnen für die Aufnahme eines Reinigungsschlittens ausgeführt. Zusätzlich vorgesehene integrierte Stifte und entsprechende Ausnehmungen verhindern ein Verrutschen der Spiegelmodule, wenn diese während der Lagerung oder des Transportes übereinander aufgetürmt sind.

### Beschreibung

Die Erfindung wird im Folgenden anhand der beispielhaften, schematischen Skizzen näher erläutert. Dabei zeigen
FIG 1 ein Fresnel-Solar-Kollektor-System,
FIG 2a und 2b Varianten der Ausrichtung der Spiegelmodule,
FIG 3 ein verschachteltes Fresnel-Solar-Kollektor-System,
FIG 4 Spiegelelemente,
FIG 5 Ausführungsvarianten von Querschnitten der Spiegelelemente,
FIG 6 gekoppelte Spiegelelemente,
FIG 7 aufeinander gestapelte Spiegelmodule mit Randleisten und
FIG 8 Herstellungsschritte von Spiegelelementen mit dreieckförmigem Querschnitt.

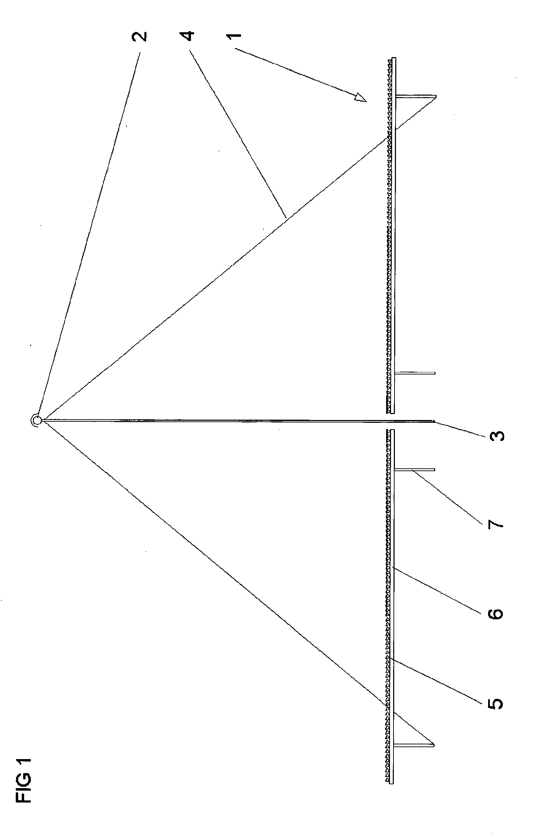

Das Fresnel-Solar-Kollektor-System in FIG 1 besteht im Wesentlichen aus erfindungsgemäßen Spiegelmodulen 1, die das einfallende Sonnenlicht auf die Receiver-Einheit 2 fokussieren, welche in mehreren Metern Höhe über dem Spiegelmodul 1 angebracht ist. Die Receiver-Einheit 2 kann nach dem Stand der Technik über Stangen 3 und Drahtseile 4 so befestigt werden, dass auch bei Wind und Sonneneinfluss die Lage im Allgemeinen ortsfest ist. Das Spiegelmodul 1 besteht erfindungsgemäß aus Spiegelelementen 5 die auf einer Trägerplatte 6 im Wesentlichen über die gesamte Länge, zumindest jedoch abschnittsweise, schwenkbar gelagert sind. Die Trägerplatte 6 ist über im Boden verankerte Stützen 7 präzise nach der Receiver-Einheit 2 ausgerichtet gelagert. Die Lagerung der Trägerplatten 6 kann in einer alternativen Ausführung nach dem Stand der Technik auch auf einem Tragwerk statt auf einzelnen Stützen 7 erfolgen. Die Trägerplatte 6 ist in Leichtbauweise ausgeführt, entweder als Verbundplatte mit geschäumten Kern, als Wabenkernplatte oder auch in jeder anderen Bauweise mit geringem Gewicht und hoher Steifigkeit. Die verwendeten Materialien sollen jedoch eine ähnliche Wärmeausdehnung wie das Material der Spiegelelemente 5 aufweisen.

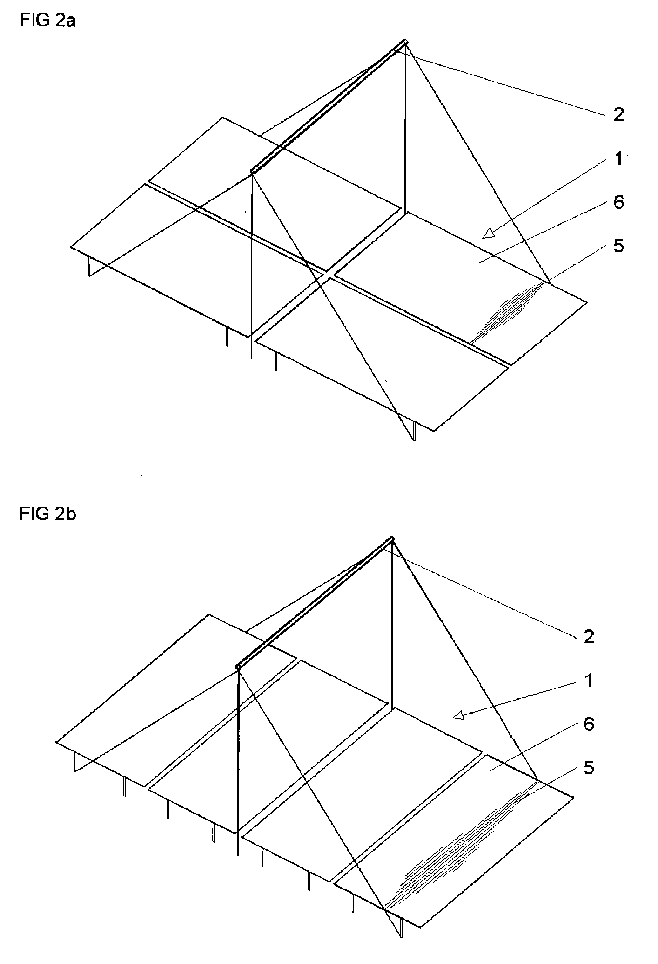

Die Größe der Spiegelmodule richtet sich im Allgemeinen an die Abmessungen von Standardtransportmitteln, kann aber im Prinzip auch andere, der jeweiligen Anwendung angepasste Abmessungen aufweisen. In der Regel ergeben sich durch solche Standardtransportmittel wie Container oder LKW längliche, rechteckige Spiegelmodule 1 von zum Beispiel ca. 3 m x ca. 12 m. Es kann aber für bestimmte Anwendungen zweckmäßig sein, beliebige andere Größen zu wählen. Die Anordnung der einzelnen Spiegelmodule 1 entlang der Receiver-Einheit 2 kann dann sowohl parallel, wie in FIG 2a dargestellt, oder auch, wie in FIG 2b skizziert, normal zur Längsseite der Trägerplatte 6 erfolgen. Die Lage der Spiegelelemente 5 ist jedoch stets so ausgeführt, dass diese parallel zur Receiver-Einheit 2 liegen. Abhängig von der gewünschten Konzentration und der Höhe der Receiver-Einheit 2 können in beiden Ausführungsformen mehrere Spiegelmodule 1 parallel zueinander angeordnet werden.

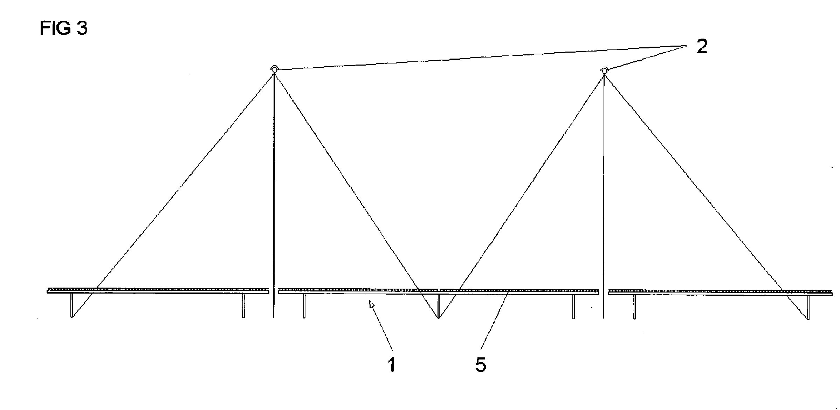

Wie bei bekannten Fresnel-Solar-Kollektor-Systemen können die Receiver-Einheiten 2, wie in FIG 3 dargestellt, auch so angeordnet werden, dass diese in definiertem Abstand parallel zueinander verlaufen und ein Teil der zwischen den zwei Receiver-Einheiten 2 angeordneten Spiegelelemente 5 der einen und ein Teil der anderen Receiver-Einheit 2 zugeordnet ist. Durch diese abwechselnd der linken und rechten Receiver-Einheit 2 zugeordneten Spiegelelemente 5 erhöht sich der Wirkungsgrad aufgrund der geringeren Verschattung der einzelnen Spiegel untereinander. Diese bekannte, optimierte Anordnung kann auch mit dem gegenständlichen, erfindungsgemäßen Spiegelmodul 1 realisiert werden.

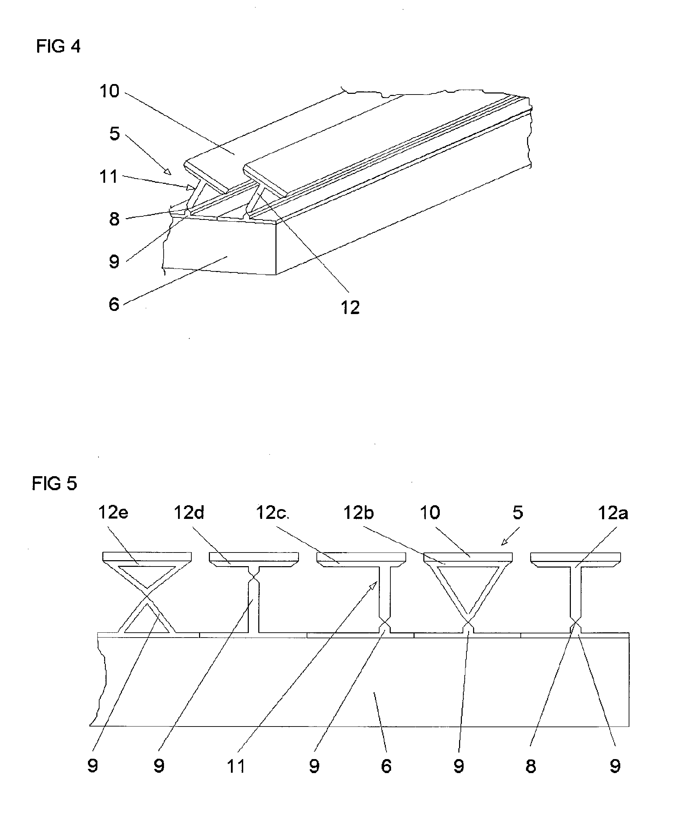

FIG 4 zeigt die erfindungsgemäße Lagerung der Spiegelelemente 5 auf der Trägerplatte 6 mittels Filmscharnieren 8. Diese Filmscharniere 8 verlaufen entweder über Abschnitte der Längen der Spiegelelemente 5 oder über die gesamte oder den Großteil der Längen der Spiegelelemente 5, sodass sich diese aufgrund der Lagerung auf der Trägerplatte 6 nicht oder nur gemeinsam mit der Trägerplatte 6 durchbiegen können. Die dadurch gegebene Formstabilität stellt einen hohen optischen Wirkungsgrad des Spiegelmoduls 1 sicher. Die Spiegelelemente 5 weisen somit ein Tragelement 11 aus einem Fußelement 9 und einem Spiegeltragteil 12 auf, welche durch ein Filmscharnier 8 miteinander gelenkig verbunden sind. Auf der Oberseite des Spiegeltragteils 12 befindet sich eine Spiegelfläche 10, insbesondere aus einer optisch gut reflektierenden Beschichtung, einer Spiegelfolie oder einem dünnen Glasspiegel. Das Tragelement 11 der Spiegelelemente 5 besteht bei einer Ausführungsform der Erfindung aus einem Kunststoffprofil, sodass der Spiegeltragteil 12 mit dem Filmscharnier 8 und dem Fußelement 9 einen einzigen Bauteil bildet. Das Tragelement 11 kann über die gesamte Länge der Spiegelelemente 5 mittels eines Filmscharniers 8 und eines Fußelementes 9 an der Trägerplatte 6 angeordnet sein, es kann jedoch auch abschnittsweise mit Filmscharnieren 8 versehen sein mit abschnittsweise vorgesehenen Fußelementen 9 oder mit einem über die Tragelementlänge verlaufenden einzigen Fußelement 9. Das Filmscharnier 8 kann im unteren Bereich des Spiegelelementes 5, bei oder nahe der Trägerplatte 6, im mittleren oder oberen Bereich des Spiegelelementes 5 vorgesehen sein, muss jedoch mindestens jenen Kippwinkel zulassen, der die Sonnenstrahlung über einen ganzen Tag stets auf die Receiver-Einheit 2 lenkt. Der Kippwinkel hängt von der Geometrie des Fresnel-Solar-Kollektor-Systems sowie von der Ausrichtung der Receiver-Einheit 2 nach den Himmelsrichtungen ab, sollte in der Regel aber einen Wert von rund 90° zulassen. Eine Ausführungsform mit einem Kippwinkel über 90° kann dann sinnvoll sein, wenn die Spiegelfläche 10 zum Schutz vor Witterungseinflüssen über eine senkrechte Stellung hinaus geschwenkt werden soll. Die Breite der Spiegelelemente 5 beträgt zwischen wenigen Millimetern bis zu rund 100 mm, entsprechend dem Durchmesser der Receivereinheit 2, insbesondere entspricht die Breite der Spiegel 10 bzw. Spiegelelemente 5 höchstens dem Durchmesser der Receiver-Einheit 2. Die Länge der Spiegelelemente 5 richtet sich nach der Anordnung und Dimension der Spiegelmodule 1, sodass die Spiegelelemente 5 über die ganze Länge der Spiegelmodule 1 reichen. Daraus ergeben sich Längen von beispielsweise 3 m bis 12 m.

Die in FIG 5 dargestellten verschiedenen Querschnittsformen von Spiegeltragteilen 12 und 12a bis 12e der Spiegelelemente 5 richten sich je nach der Lage des Filmscharniers 8 und der Größe des Spiegelelements 5 und sollen einen möglichst hohen Torsionswiderstand aufweisen. Dies stellt sicher, dass bei einer Kippbewegung die Spiegelfläche 10 über die ganze Länge formstabil bleibt. Der Spiegeltragteil 12a weist ein T-förmiges Profil auf, die Querschnittsform des Spiegeltragteils 12b ist dreieckförmig, die Querschnittsform des Spiegeltragteils 12c L-förmig. Der Spiegeltragteil 12d ist ebenfalls T-förmig mit einem nahe der Spiegelfläche 10 befindlichen Filmscharnier 8. Der Spiegeltragteil 12c bildet gemeinsam mit dem Fußelement 9 ein X im Querschnitt. Die Verbindung zwischen dem Fußelement 9 und Trägerplatte 6 kann durch ein Nut- und Federsystem, durch Klebung, Vernietung oder Verschraubung oder jeder anderen Verbindungsart nach dem Stand der Technik erfolgen.

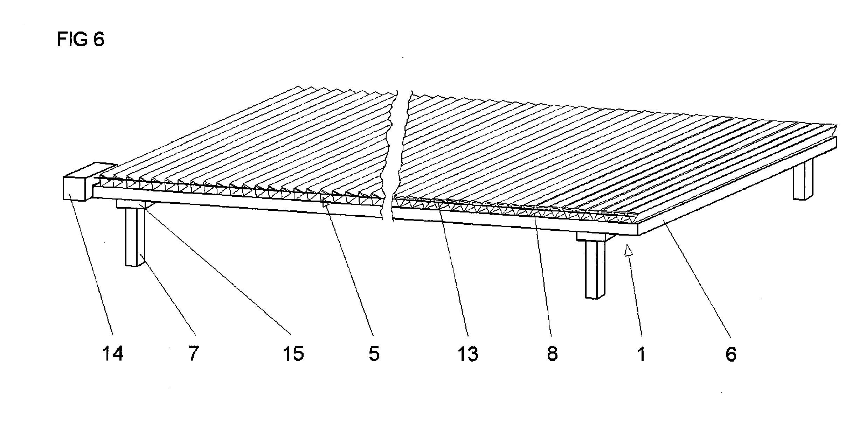

Die Nachführung der linearen Spiegelelemente 5 erfolgt vorzugsweise und wie beim Stand der Technik über eine Koppelung derselben untereinander mit einer in FIG 6 vereinfacht dargestellte Verbindungseinheit 13. Die Verbindungseinheit 13 verbindet alle oder eine Gruppe von Spiegelelementen 5 eines Spiegelmoduls 1 mit einem, aufgrund der geringen Windkräfte an den schmalen Spiegelelementen 5 klein ausführbaren Antrieb 14. Die Positionierung der Verbindungseinheit 13 und des Antriebs 14 kann am Rand oder auch in der Mitte des jeweiligen Spiegelmoduls 1 erfolgen. Durch Ausnehmungen oder seitliche Vorbeiführung kann der Antrieb 14 auch mitten in der Trägerplatte 6 oder auf der Unterseite der Trägerplatte 6 befestigt werden. Die Wahl der Lage des Verbindungspunktes zwischen dem Spiegelelement 5 und der Verbindungseinheit 13 soll einen möglichst großen Abstand und damit großen Hebel zur Achse des Filmscharniers 8 aufweisen, um die Winkeltreue und damit den guten optischen Wirkungsgrad des Solar-Spiegel-Systems zu gewährleisten. Der Antrieb 14 kann vorteilhafter Weise als elektrischer Linearantrieb mit einer selbsthemmenden Spindel realisiert werden, kann aber auch von jede andere Antriebsform aufweisen, wie zum Beispiel pneumatisch oder hydraulisch, und sowohl direkt oder auch über ein Getriebe erfolgen. Durch die Befestigung der Spiegelelemente 5, der Verbindungseinheit 13 und des Antriebs 14 auf der Trägerplatte 6 wird ein in sich komplett funktionsfertiges und transportfähiges Spiegelmodul 1 geschaffen, dessen Herstellung, insbesondere Roboter gestützt in einer Werkshalle erfolgen kann. Die Qualitätsprüfung der optischen Genauigkeit des Spiegelmoduls 1 kann so ebenfall unmittelbar während und nach der Produktion erfolgen, sodass die Ausrichtung bei der Errichtung vor Ort auf die präzise Lage des Spiegelmoduls 1 beschränkt wird. Die Spiegelelemente 5 selbst und die Verbindungseinheit 13 mit dem Antrieb 14 müssen nicht neu eingestellt werden, was die Errichtung des gesamten Solarfeldes vereinfacht und beschleunigt.

Die Fixierung der Spiegelmodule 1 auf den Stützen 7 wird erfindungsgemäß durch an der Trägerplatte 6 befestigte Fixierelemente 15 realisiert, wodurch einerseits eine einfache und rasche Montage erfolgen kann und andererseits eine hohe Einstellgenauigkeit erzielt wird.

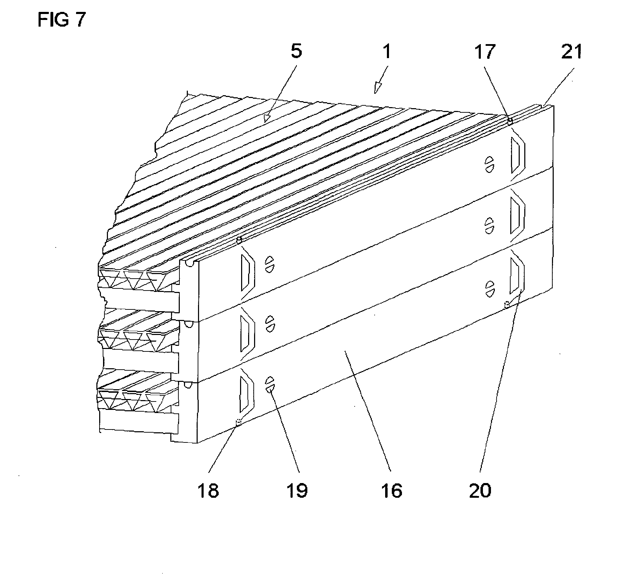

Obwohl die Windkräfte auf die beweglichen Teile durch die schmalen Spiegelelemente 5 bereits sehr gering sind, kann ferner ein Abdecken der Windangriffsflächen der außen liegenden linearen Spiegelelemente 5 erfolgen, beispielsweise durch Randleisten 16, wie in FIG 7 skizziert. Weiters können diese Randleisten 16 auch eine Schutzfunktion für die Spiegelelemente 5 bei der Stapelung mehrerer Spiegelmodule 1 während der Lagerung oder auch des Transportes ausüben. Dies wird erfindungsgemäß dadurch erreicht, dass die Randleisten 16 über das Spiegelmodul 1 um so viel weiter nach oben und auch nach unten reichen als das Ausmaß einer etwaigen Durchbiegung der Spiegelelemente 5 oder der Trägerplatte 6 bei statischer Gewichtsbelastung aber auch bei dynamischer Belastung während des Transports beträgt. Werden mehrere Spiegelmodule 1 übereinender gestapelt kommen nun ausschließlich die Randleisten 16 aufeinander zu liegen und alle weiteren Teile des Spiegelmoduls 1 berühren einander nicht. In den Randleisten 16 angebrachte Stifte 17 oder Noppen sowie diesen angepasste Ausnehmungen 18 auf der anderen Kante der Randleisten 16 machen eine genaue Positionierung der einzelnen Spiegelmodule 1 übereinander möglich und verhindern zusätzlich ein Verrutschen und damit ein Beschädigen derselben. Zusätzlich können sich Ösen 19 in den Randleisten 16 zur Aufnahme von Hebeschlingen oder Hacken zum Anheben der Spiegelmodule 1 mit verschiedenen Hebezeugen befinden. Eine unterstützende Positionierung per Hand bei der Stapelung und Montage kann durch in die Randleisten 16 integrierte Griffe 20 stark erleichtert werden.

Die Reinigung der Spiegelelemente 5 kann durch einen über das Spiegelmodul 1 beweglichen Reinigungsschlitten erfolgen. Zu diesem Zweck kann erfindungsgemäß an zwei oder mehreren Stellen ein entsprechender Abstand zwischen Spiegelelementen 5 vorgesehen werden und hier in der Trägerplatte 6 eine Fahrrinne 21 zur Aufnahme und Führung des Reinigungsschlitten vorgesehen sein. Die Fahrrinnen können auch randseitig an der Trägerplatte 6 ausgebildet sein. Bei einer alternativen Ausführung kann eine solche Fahrrinne 21 auch als integraler Bestandteil der seitlich angebrachten Randleisten 16 realisiert werden. In beiden Fällen kann die Fahrrinne auch als Schiene oder Profilführung ausgebildet sein. Um die Spiegelelemente 5 nicht nur vor Wind sondern auch vor weiteren Witterungseinflüssen zu schützen, kann eine nicht dargestellte, lichtdurchlässige Abdeckung aus Glas oder Kunststoff auf jedem Spiegelmodul 1 angebracht werden.

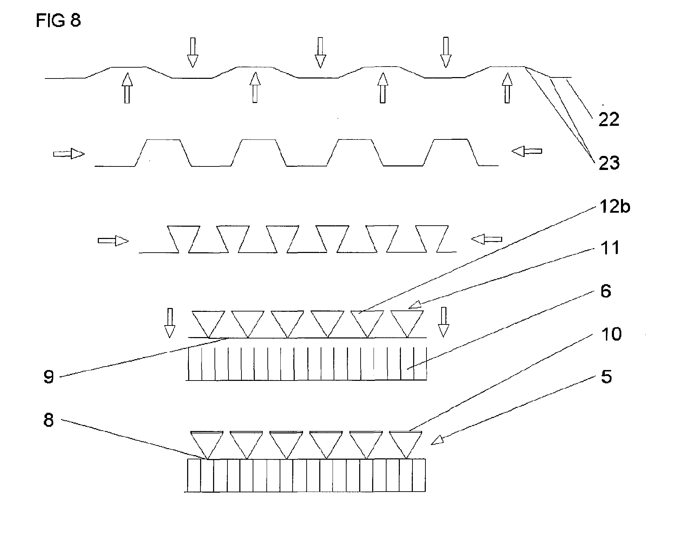

FIG 8 zeigt schematisch ein erfindungsgemäßes Herstellungsverfahren der Spiegelelemente 5 mit dreieckigen Spiegeltragteilen 12b aus einer Platte 22 aus Kunststoff, Faserverbundwerkstoff oder insbesondere aus einem durch Härtemittel verfestigten Karton. Dabei wird die Platte 22 in bestimmten Abständen mit mehreren parallel verlaufenden Knicken 23 versehen, wobei einige der Knicken 23 später als Filmscharnier 8 fungieren. Das Material muss also einerseits formstabil sein und andererseits an den Knicken 23 flexibel und witterungsbeständig sein. Nach dem Knicken werden die einzelnen Abschnitte in die jeweils gewünschte Richtung gebracht und gleichzeitig die Platte 22 von der Seite her zusammen geschoben. Der dadurch entstehende zahnförmige Querschnitt geht durch ein weiteres Zusammenschieben in den gewünschten Querschnitt über. Dadurch werden miteinander verbundene Tragelemente 11 mit Spiegeltragteilen 12b, Fußelementen 9 und Filmscharnieren 8 gebildet. Diese Struktur kann durch Befestigen, vorzugsweise durch Kleben, mit einer fertigen oder einer an der Oberseite noch offenen Verbundplatte in Leichtbauweise zu der gewünschten Trägerplatte 6 mit Spiegelelementen 5 zusammengefügt werden. Je nach Anwendung kann die als reflektierende Beschichtung, Folie oder der Glasspiegel ausgeführte Spiegelfläche 10 vor oder nach diesem Produktionsschritt aufgebracht werden.

### Bezugsziffernliste

- 1: Spiegelmodul
- 2: Receiver-Einheit
- 3: Stange
- 4: Drahtseil
- 5: Spiegelelement
- 6: Trägerplatte
- 7: Stütze
- 8: Filmscharnier
- 9: Fußelement
- 10: Spiegelfläche
- 11: Tragelement
- 12: Spiegeltragteil
- 12 a-e: Spiegeltragteil
- 13: Verbindungseinheit
- 14: Antrieb
- 15: Fixierelement
- 16: Randleiste
- 17: Stift
- 18: Ausnehmung
- 19: Öse
- 20: Griff
- 21: Fahrrinne
- 22: Platte
- 23: Knick

## Patentansprüche

1. Spiegelmodul (1) eines Fresnel-Solar-Kollektor-Systems mit einer Vielzahl von parallel zueinander auf einer Trägerplatte (6) schwenkbar gelagerten Spiegelelementen (5), welche das Sonnenlicht auf eine über dem Spiegelmodul (1) erhöht gelagerte Receiver-Einheit (2) fokussieren,
**dadurch gekennzeichnet,**
**dass** die Spiegelelemente (5) an der Trägerplatte (6) zumindest entlang von Längsabschnitten der Trägerplatte und der Spiegelelemente schwenkbar gelagert sind.

2. Spiegelmodul (1) nach Anspruch 1 **dadurch gekennzeichnet, dass** die Spiegelelemente (5) an der Trägerplatte (6) zumindest im Wesentlichen über ihre gesamte Länge schwenkbar gelagert sind.

3. Spiegelmodul (1) nach Anspruch 1 oder 2, **dadurch gekennzeichnet, dass** die schwenkbare Lagerung der Spiegelelemente (5) als Filmscharnier (8) ausgeführt ist.

4. Spiegelmodul (1) nach einem der Ansprüche 1 bis 3, **dadurch gekennzeichnet, dass** die Spiegelelemente (5) jeweils ein Tragelement (11) aus einem Spiegeltragteil (12, 12a bis 12e) und einem mit der Trägerplatte (6) verbindbaren Fußelement (9) aufweisen, wobei der Spiegeltragteil (12, 12a bis 12e) mit dem Fußelement (9) über das zumindest eine mitintegrierte Filmscharnier (8) verbunden ist.

5. Spiegelmodul (1) nach Anspruch 4, **dadurch gekennzeichnet, dass** das Tragelement (11) ein vorzugsweise aus Kunststoff bestehendes Profil ist, wobei der Spiegeltragteil (12, 12a bis 12e) insbesondere einen T- förmigen, L-förmigen oder dreieckförmigem Querschnitt aufweist, wobei auf der der Sonne zugewandten Seite des Tragelementes (11) eine Spiegelfläche (10), insbesondere als reflektierende Beschichtung, als aufgeklebte Spiegelfolie oder als Glasspiegel ausgeführt, aufgebracht ist, wobei die Spiegelflächen (10) vorzugsweise eine Breite aufweisen, die höchstens dem Durchmesser der Receiver-Einheit (2) entspricht.

6. Spiegelmodul (1) nach einem der Ansprüche 1 bis 5, **dadurch gekennzeichnet, dass** der Trägerplatte (6) in Leichtbauweise, vorzugsweise als Werkstoffverbundplatte oder Wabenkemplatte, ausgeführt ist,

7. Spiegelmodul (1) nach einem der Ansprüche 1 bis 6, **dadurch gekennzeichnet, dass** die schwenkbaren Spiegelelemente (5) gruppenweise oder sämtlich über mindestens eine Verbindungseinheit (13) mechanisch miteinander gekoppelt sind und über diese mit Hilfe eines Antriebes (14) der Sonne nachfahrbar sind.

8. Spiegelmodul (1) nach einem der Ansprüche 1 bis 7, **dadurch gekennzeichnet, dass** die Spiegelelemente (5) parallel oder normal zur Längsseite der Trägerplatte (6) ausgerichtet sind und gemeinsam mit der Verbindungseinheit (13) und dem Antrieb (14) eine vorgefertigte, mit Standardtransportmitteln transportierbare Einheit bilden.

9. Spiegelmodul (1) nach einem der Ansprüche 1 bis 8, **dadurch gekennzeichnet, dass** an der Trägerplatte (6) zwischen Spiegelelementen (5) oder randseitig, zumindest an zwei Stellen, jeweils ein Spalt als Fahrrinne (21) für einen Reinigungsschlitten ausgebildet ist.

10. Spiegelmodul (1) nach einem der Ansprüche 1 bis 9, **dadurch gekennzeichnet, dass** über den Spiegelelementen (5) eine zusätzliche lichtdurchlässige Abdeckung aus Glas oder Kunststoff zum Schutz der Spiegelelemente (5) vor Witterungseinflüssen anbringbar ist.

11. Spiegelmodul (1) nach einem der Ansprüche 1 bis 10, **dadurch gekennzeichnet, dass** die Trägerplatte (6) Fixierelemente (15) zur raschen Befestigung und anschließender Feinjustage auf Stützen (7) aufweist.

12. Spiegelmodul (1) nach einem der Ansprüche 1 bis 11, **dadurch gekennzeichnet, dass** die Trägerplatte (6) an zumindest zwei ihrer Seiten jeweils eine, die Spiegelelemente (5) überragende Randleiste (16) aufweist, wobei vorzugsweise die Ober- bzw. Unterkanten der Randleisten (16) Stifte (17) oder Noppen und entsprechende Ausnehmungen (18) aufweisen, derart, dass mehrere Spiegelmodule (1) aufeinander unverschiebbar stapelbar sind.

13. Spiegelmodul (1) nach Anspruch 12, **dadurch gekennzeichnet, dass** an den Randleisten (16) Ösen (19) und Griffe (20) angeordnet sind, sodass Hebezeuge für Transport und Montage angebracht und eine unterstützende Positionierung von Hand ermöglicht ist, wobei die Randleisten (16) vorzugsweise Fahrrinnen (21) für die Aufnahme eines Reinigungsschlitten aufweisen.

14. Verfahren zur Herstellung eines Spiegelmoduls (1) nach Anspruch 1 mit Spiegeltragteilen (12b) mit dreieckigem Querschnitt nach Anspruch 5,
**dadurch gekennzeichnet,**
**dass** eine Platte (22) in bestimmten Abständen mit mehreren parallel verlaufenden Knicken (23) derart versehen wird, dass durch Falten und Zusammenschieben miteinander verbundene im Querschnitt dreieckige Spiegeltragteile (12b) mitsamt integrierten Filmscharnieren (8) und Fußelementen (9) gebildet werden, wobei die derart gebildeten Spiegelelemente (5) mit Spiegelflächen (10) versehen und auf einer Tragplatte (6) befestigt werden.

15. Verfahren nach Anspruch 18, **dadurch gekennzeichnet, dass** die Platte (22) aus Kunststoff, Faserverbundwerkstoff oder aus durch Härtemittel verfestigtem Karton besteht.

## Claims

1. A mirror module (1) of a Fresnel solar collector system with a multiplicity of mirror elements (5) pivotably mounted parallel to one another on a support plate (6), which focus the sunlight onto a receiver unit (2) mounted in an elevated manner above the mirror module (1),
**characterised**
**in that** the mirror elements (5) are pivotably mounted on the support plate (6) at least along longitudinal sections of the support plate and the mirror elements.

2. The mirror module (1) according to Claim 1, **characterised in that** the mirror elements (5) on the support plate (6) are pivotably mounted at least substantially over the entire length thereof.

3. The mirror module (1) according to Claim 1 or 2, **characterised in that** the pivotable mounting of the mirror elements (5) is realised as a film hinge (8).

4. The mirror module (1) according to one of Claims 1 to 3, **characterised in that** the mirror elements (5) have one support element (11) in each case made up of a mirror support part (12, 12a to 12e) and a base element (9) that can be connected to the support plate (6), wherein the mirror support part (12, 12a to 12e) is connected to the base element (9) by means of the at least one also integrated film hinge (8).

5. The mirror module (1) according to Claim 4, **characterised in that** the support element (11) is a profile preferably consisting of plastic, wherein the mirror support part (12, 12a to 12e) has a T-shaped, L-shaped or triangular cross section in particular, wherein a mirror surface (10), in particular realised as a reflective coating, as an adhesively bonded mirror film or as a glass mirror, is applied on the side of the support element (11) facing the sun, wherein the mirror surfaces (10) preferably have a width, which at most corresponds to the diameter of the receiver unit (2).

6. The mirror module (1) according to one of Claims 1 to 5, **characterised in that** the support plate (6) is realised in a lightweight design, preferably as a material composite board or honeycomb-core board.

7. The mirror module (1) according to one of Claims 1 to 6, **characterised in that** the pivotable mirror elements (5) are mechanically coupled to one another in groups or altogether by means of at least one connecting unit (13) and can be tracked to the sun by means of the same, with the aid of a drive (14).

8. The mirror module (1) according to one of Claims 1 to 7, **characterised in that** the mirror elements (5) are orientated parallel or normal to the longitudinal side of the support plate (6) and together with the connecting unit (13) and the drive (14) form a pre-assembled unit that can be transported using standard transport means.

9. The mirror module (1) according to one of Claims 1 to 8, **characterised in that** a gap is constructed in each case as a channel (21) for a cleaning carriage on the support plate (6) between mirror elements (5) or at the edge, at least at two positions.

10. The mirror module (1) according to one of Claims 1 to 9, **characterised in that** an additional light-permeable cover made from glass or plastic, for protection of the mirror elements (5) from influences of the weather can be attached over the mirror elements (5).

11. The mirror module (1) according to one of Claims 1 to 10, **characterised in that** the support plate (6) has fixing elements (15) for the rapid fastening and subsequent fine adjustment on supports (7).

12. The mirror module (1) according to one of Claims 1 to 11, **characterised in that** the support plate (6) has one edge cover strip (16) overlapping the mirror elements (5), in each case on at least two of the sides thereof, wherein the upper or lower edges of the edge cover strips (16) preferably have pins (17) or knobs and corresponding recesses (18) in such a manner that a plurality of mirror modules (1) can be stacked on one another in a non-displaceable manner.

13. The mirror module (1) according to Claim 12, **characterised in that** eyelets (19) and handles (20) are arranged on the edge cover strips (16), so that lifting devices for transport and mounting are attached and a supporting positioning by hand is enabled, wherein the edge cover strips (16) preferably have channels (21) for accommodating a cleaning carriage.

14. A method for producing a mirror module (1) according to Claim 1, with mirror support parts (12b) with triangular cross section according to Claim 5,
**characterised**
**in that** a plate (22) is provided with a plurality of parallel running kinks (23) at certain spacings in such a manner that mirror support parts (12b) that are connected to one another and triangular in cross section, and include integrated film hinges (8) and base elements (9) are formed by folding and pushing together, wherein the mirror elements (5) formed in this manner are provided with mirror surfaces (10) and are fastened on a support plate (6).

15. The method according to Claim 18, **characterised in that** the plate (22) is produced from plastic, fibre composite material or from cardboard reinforced by curing agents.

## Revendications

1. Module à miroirs (1) d'un système de collecteur solaire de Fresnel avec une pluralité d'éléments de miroir (5) montés de manière pivotante parallèlement les uns aux autres sur une plaque de support (6), lesquels focalisent la lumière solaire sur une unité réceptrice (2) montée de manière surélevée au-dessus du module à miroirs (1),
**caractérisé en ce que**
les éléments de miroir (5) sont montés sur la plaque de support (6) de manière pivotante au moins le long de sections longitudinales de la plaque de support et des éléments de miroir.

2. Module à miroirs (1) selon la revendication 1, **caractérisé en ce que** les éléments de miroir (5) sont montés de manière à pouvoir pivoter sur la plaque de support (6) au moins sensiblement sur toute leur longueur.

3. Module à miroirs (1) selon la revendication 1 ou 2, **caractérisé en ce que** le montage pivotant des éléments de miroir (5) est réalisé en tant que charnière en film (8).

4. Module à miroirs (1) selon l'une des revendications 1 à 3, **caractérisé en ce que** les éléments de miroir (5) présentent respectivement un élément de support (11) en une partie de support de miroir (12, 12a à 12e) et un élément de pied (9) pouvant être relié avec la plaque de support (6), moyennant quoi la partie de support de miroir (12, 12a à 12e) est reliée avec l'élément de pied (9) par l'intermédiaire de l'au moins une charnière en film (8) intégrée avec.

5. Module à miroirs (1) selon la revendication 4, **caractérisé en ce que** l'élément de support (11) est un profilé se composant de préférence d'une matière synthétique, moyennant quoi la partie de support de miroir (12, 12a à 12e) présente en particulier une section transversale en forme de T, en forme de L ou en forme de triangle, moyennant quoi une surface à miroir (10) réalisée en particulier en tant que revêtement réfléchissant, en tant que feuille à miroir collée ou en tant que miroir en verre, est appliquée sur le côté de l'élément de support (11) orienté vers le soleil, moyennant quoi les surfaces à miroir (10) présentent de préférence une largeur, laquelle correspond tout au plus au diamètre de l'unité réceptrice (2).

6. Module à miroirs (1) selon l'une des revendications 1 à 5, **caractérisé en ce que** la plaque de support (6) est réalisée selon un mode de construction léger, de préférence en tant que plaque en matériau composite ou plaque en nid d'abeille.

7. Module à miroirs (1) selon l'une des revendications 1 à 6, **caractérisé en ce que** les éléments de miroir (5) pouvant pivoter sont couplés mécaniquement ensemble, par groupes ou en totalité, via au moins une unité de liaison (13) et peuvent suivre le soleil par l'intermédiaire de celle-ci à l'aide d'un mécanisme d'entraînement (14).

8. Module à miroirs (1) selon l'une des revendications 1 à 7, **caractérisé en ce que** les éléments de miroir (5) sont orientés parallèlement ou normalement par rapport au côté longitudinal de la plaque de support (6) et forment, ensemble avec l'unité de liaison (13) et le mécanisme d'entraînement (14), une unité préfabriquée pouvant être transportée avec des moyens de transport standards.

9. Module à miroirs (1) selon l'une des revendications 1 à 8, **caractérisé en ce que** l'on réalise une fente en tant rainure de circulation (21) pour un chariot de nettoyage sur la plaque de support (6), respectivement entre des éléments de miroir (5) ou du côté du bord, au moins à deux endroits.

10. Module à miroirs (1) selon l'une des revendications 1 à 9, **caractérisé en ce que** l'on peut aménager, au-dessus des éléments de miroir (5), une couverture translucide supplémentaire en verre ou en matière synthétique pour la protection des éléments de miroir (5) contre les intempéries.

11. Module à miroirs (1) selon l'une des revendications 1 à 10, **caractérisé en ce que** la plaque de support (6) présente des éléments de fixation (15) pour la fixation rapide et l'ajustement de précision qui s'en suit sur des supports (7).

12. Module à miroirs (1) selon l'une des revendications 1 à 11, **caractérisé en ce que** la plaque de support (6) présente, sur au moins deux de ses côtés, respectivement une bordure (16) en saillie par rapport aux éléments de miroir (5), moyennant quoi les bords supérieur ou inférieur des bordures (16) présentent de préférence des ergots (17) ou des boutons et des évidements correspondants (18) de manière à ce que plusieurs modules à miroirs (1) peuvent être empilés les uns au-dessus des autres sans pouvoir se décaler.

13. Module à miroirs (1) selon la revendication 12, **caractérisé en ce que** des oeillets (19) et des poignées (20) sont disposé(e)s sur les bordures (16), de sorte qu'il est possible de mettre en place des outils de levage pour le transport et le montage et qu'un positionnement manuel en guise d'aide devient possible, moyennant quoi les bordures (16) présentent de préférence des rainures de circulation (21) pour la réception d'un chariot de nettoyage.

14. Procédé pour la fabrication d'un module à miroirs (1) selon la revendication 1 avec des parties de support de miroir (12b) avec une section transversale triangulaire selon la revendication 5,
**caractérisé en ce que**
une plaque (22) est munie de plusieurs plis (23) s'étendant parallèlement à des distances prédéterminées de manière à ce que par pliage et emboîtement, des parties de support de miroir (12b) triangulaires en section transversale reliées ensemble sont formées ensemble avec des charnières en film (8) intégrées et des éléments de pieds (9), moyennant quoi les éléments de miroir (5) ainsi formés sont munis de surfaces à miroirs (10) et sont fixés sur une plaque de support (6).

15. Procédé selon la revendication 18, **caractérisé en ce que** la plaque (22) se compose d'une matière synthétique, d'un matériau composite à fibres ou de carton solidifié grâce à un agent de durcissement.
